Europäisches Patentamt

European Patent Office

Office européen des brevets

(11) Veröffentlichungsnummer: **0 385 177 B1**

(12) # EUROPÄISCHE PATENTSCHRIFT

(45) Veröffentlichungstag der Patentschrift: **10.05.95**

(51) Int. Cl.⁶: **C01B  13/11**

(21) Anmeldenummer: **90102790.4**

(22) Anmeldetag: **13.02.90**

(54) **Ozonerzeuger.**

(30) Priorität: **03.03.89 CH 798/89**

(43) Veröffentlichungstag der Anmeldung:
**05.09.90 Patentblatt  90/36**

(45) Bekanntmachung des Hinweises auf die
Patenterteilung:
**10.05.95 Patentblatt  95/19**

(84) Benannte Vertragsstaaten:
**CH DE ES FR GB LI**

(56) Entgegenhaltungen:
DE-A- 3 424 889          DE-A- 3 521 985
DE-A- 3 830 106          DE-C- 1 132 253
US-A- 3 984 697          US-A- 4 774 062

**PATENT ABSTRACTS OF JAPAN vol. 3, no. 7 (C-34)(128) 24 Januar 1979,& JP-A-53 131296 (HITACHI SEISAKUSHO K.K.) 15 November 1978,**

(73) Patentinhaber: **Ozonia AG
Stettbachstrasse 1
CH-8600 Dübendorf (CH)**

(72) Erfinder: **Hirth, Michael, Dr.
Bündtenweg 9
CH-5507 Mellingen (CH)**
Erfinder: **Mechtersheimer, Günter, Dr.
Oberdorfstrasse 25
CH-5415 Nussbaumen (CH)**

(74) Vertreter: **Hetzer, Hans Jürgen et al
c/o Asea Brown Boveri AG
Abteilung TEI
CH-5401 Baden (CH)**

# Beschreibung

## Technisches Gebiet

Die Erfindung bezieht sich auf einen Ozonerzeuger gemäß dem einleitenden Teil des Patentanspruchs 1,

Sie geht dabei aus von einem Stand der Technik, wie er sich beispielsweise aus der DE-A-3521985 ergibt.

## Technologischer Hintergrund und Stand der Technik

Für sehr viele Prozesse sind überaus grosse Ozonmengen in der Grössenordnung von hunderten Kilogramm bis Tonnen pro Stunde erforderlich, und darum können sie praktisch nur dann durchgeführt werden, wenn kompakte Hochleistungsozongeneratoren zur Verfügung stehen, welche derartig hohe Ozonmengen liefern können.

Zur Steigerung der Leistungsdichte von Ozonisatoren - seien es solche mit rohrförmigem oder plattenförmigem Dielektrikum - wurde in der Vergangenheit das Dielektrikum Glas durch Dielektrika auf Kunststoff - oder Keramikbasis ersetzt.

Bei einem Ozongenerator ist nämlich die pro Entladungsflächeneinheit gebildete Ozonmenge Y der elektrischen Leistung W pro Flächeneinheit proportional:

$$Y = K \cdot W$$

Die elektrische Leistung W wiederum ist in erster Näherung proportional der relativen Dielektrizitätskonstante E, und umgekehrt proportional der Dicke d des Dielektrikums:

$$W = K' \cdot E/d$$

Wird als Dielektrikum Glas verwendet , so liegt die relative Dielektrizitätskonstante E um 5. Die Wandstärke derartiger Glasdielektrika muss aus Stabilitätsgründen mindestens 1,5 mm betragen.

Aus der DE-OS 26 58 913 ist ein Ozongenerator bekannt, der aus einer gekühlten Innenelektrode, einer Aussenelektrode und einer dazwischen konzentrisch angeordneten Hochspannungselektrode jeweils an ihrem Aussenmantel mit einem Glas-Email-Dielektrikum beschichtet sind. Ein Hochfrequenz-Röhrenozongenerator, bei dem auf die sich gegenüberliegenden Oberflächen von konzentrisch angeordneten Metallrohren je eine Dielektrikumschicht aus Silikatemail oder Glas aufgebracht ist, ist aus der DE-PS 25 34 033 bekannt. Aus der DE-OS 26 17 059 ist es bekannt, bei Ozongeneratoren als Dielektrikum eine dünne Kieselgel-Schicht zu verwenden, die auf selbsttragenden Metallelektroden aufgebracht ist.

Ein Ozongenerator, der aus einem selbsttragenden Keramikrohr als Dielektrikum besteht, welches an seiner Aussenmantelfläche mit einer Metallschicht einer Elektrode bedeckt ist und in welchem konzentrisch ein Metallrohr als Gegenelektrode angeordnet ist, ist aus der DE-OS 23 54 209 bekannt. Ein derartiges, selbsttragendes Keramikrohr kann jedoch nicht beliebig dünn dimensioniert werden und ist ausserdem sehr bruchempfindlich.

Ein Ozongenerator dessen Elektroden aus entkarbonisiertem Stahl bestehen, die mit einer dünnen Keramikschicht als Dielektrikum überzogen sind, ist aus der DE-OS 20 65 823 bekannt. Solche Keramikschichten müssen jedoch bei relativ hohen Temperaturen eingebrannt werden, was zu einem störenden Verzug der selbsttragenden Metallelektroden führen kann.

Ein Dielektrikum für Ozongeneratoren, das aus einem Keramikmaterial mit $Al_2O_3$, $SiO_2$ und mindestens einem Alkalioxid oder Erdalkalioxid besteht und eine Dielektrizitätskonstante zwischen 5 und 10 besitzt und 0,5 mm bis 1 mm dick ist, ist aus der DE-AS 26 18 243 bekannt.

Ozonisatoren mit Kunststoff-Dielektrikum, insbesondere solche mit titandioxidgefülltem Kunststoff-Dielektrikum, sind beispielsweise aus der US-PS 4,690,803 oder der DE-OS 3128746 bekannt.

Gegenstand der DE-B-1132253 ist ein Hockspannungsentladungsgerät für den Betrieb mit stillen elektrischen Entladungen, bei dem von den paarweise angeordneten Elektroden jeweils eine künstlich gekühlt und mit einer dielektrischen Stabilisierungsschicht, dem Dielektrikum, belegt ist. Zwischen Kühlelektrode und Dielektrikum ist eine gummielastische Zwischenschicht vorgesehen. Optional kann die dem Entladungsraum zugewandte Oberfläche der anderen Elektrode und auch das Dielektrikum mit einem Emailüberzug versehen sein, dessen Emissionsvermögen für Wärmestrahlung gösser ist als die Unterlage.

In der DE-A-3521985 wird vorgeschlagen, das Keramik-Dielektrikum an der Oberfläche zu glasieren bzw. das Kunststoff-Dielektrikum mit einem Hochtemperatur-Keramikkleber auf $SiO_2$-Basis zu überziehen.

Um bei Ozonisatoren mit Keramikdielektrikum eine gleichmässige Ladungsverteilung bei hoher Dielektrizitätskonstante zu erzoelen, wird in der DE-A-3424889 vorgeschlagen, das Keramik-Dielektrikum an seiner dem Entladungsraum zugewandten Oberfläche mit einem glasartigen Ueberzug, z.B. Glaslot, zu überziehen.

Bei all den vorbeschriebenen Nicht-Glas-Dielektrika lässt sich grundsätzlich die Leistungsdichte und damit die Ozonausbeute steigern.

Nach den Erkenntnissen der Anmelderin übt die Oberfläche des Dielektrikums einen entscheidenden Einfluss auf den Wirkungsgrad aus. Dielektrika auf Keramik- oder Kunstharzbasis sind in dieser Hinsicht Glasdielektrika unterlegen.

## Kurze Darstellung der Erfindung

Ausgehend vom Stand der Technik liegt der Erfindung die Aufgabe zugrunde, ein Dielektrikum der eingangs genannten Art zur Verfügung zu stellen, das eine hohe relative Dielektrizitätskonstante und eine relativ hohe Durchschlagfestigkeit besitzt, so dass mit dünnen Schichten in der Grössenordnung 100 $\mu$m eine hohe Ozonausbeute erzielt wird, und das hinischtlich Wirkungsgrad Glasdielektrika ebenbürtig ist.

Diese Aufgabe wird erfindungsgemäss durch die in den Patentansprüchen gekennzeichneten Merkmale gelöst.

Vorzugsweise ist dabei das Email der Deckschicht ein Email auf Eisen- oder Kobalt-Basis mit einer Dielektrizitätskonstanten kleiner oder gleich 6, während das Email der unteren Schicht(en) ein Email auf Titanbasis mit einer Dielektrizitätskonstanten grösser oder gleich 10 ist oder zumindest $TiO_2$ enthält.

Mit der Erfindung lassen sich mit Schichtdikken unter 1 mm Dielektrikumskapazitäten erreichen, welche mit denjenigen gefüllter Kunststoffdielektrika vergleichbar sind.

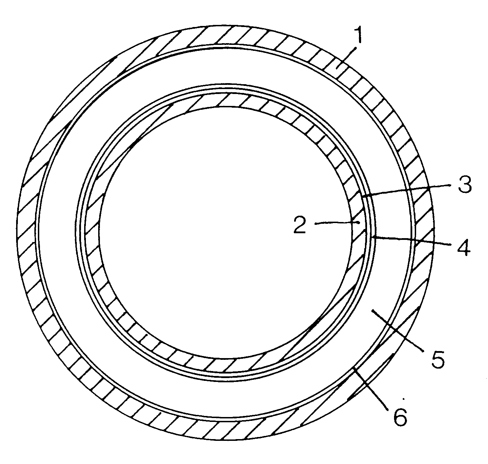

## Kurze Beschreibung der Zeichnung

In der einzigen Figur der Zeichnung ist ein Schnitt durch einen Röhrenozonisator mit einem zweischichtigen Emaildielektrikum dargestellt.

## Wege zur Ausführung der Erfindung

In der Figur ist eine erste äussere metallische Elektrode in Form eines Metallrohrs mit 1, eine zweite innere metallische Elektrode ebenfalls in Form eines Metallrohrs, vorzugsweise aus Edelstahl, mit 2 bezeichnet. Die zweite Elektrode 2 weist auf der der ersten Elektrode 1 zugewandten Oberfläche eine aus im Beispielsfall zwei übereinanderligenden Emailschichten 3, 4 auf.

Die untere Schicht 3 - bei einer praktischen Realisierung besteht diese aus mehreren nacheinander aufgebrachten Einzelschichten von etwa 100 $\mu$m mit einer Gesamtdicke von etwa 1 mm - besteht aus einem Titanemail (z.B. Email 8380 der Firma Ferro (Holland) B.V.) mit erhöhtem Titandioxid-Gehalt. Durch diese Titandioxid-Beigabe lassen sich Dielektrizitätskonstanten von über 10 erzielen. Solche Schichten können nach bekannten Verfahren direkt auf Stahlrohre, vorzugsweise solche aus Edelstahl, aufgebracht werden.

Zwecks Erreichen einer optimalen Ozonausbeute besteht die oberste Emailschicht 4 aus einem anderen Email mit kleiner Dielektrizitätskonstante ($\leq$ 6). Hierbei kommen vor allem auf eisen- oder kobalthaltige Emails in Frage, die direkt auf die Grundschicht(en) 3 aufgebracht werden mit einer Dicke von 100 - 150 $\mu$m.

Beispiele für Emailschichten sind beispielsweise in dem "Email-Handbuch" der vorgenannten Firma Ferro oder auch in der US-PS 3,954,586, Spalte 17, beschrieben. Auch sind in dieser Publikation alle wesentlichen Einzelheiten des Beschichtungsvorgangs erläutert.

Zur weiteren Verbesserung der Ozonausbeute ist die Innenseite der äusseren Elektrode 1 mit einer weiteren dielektrischen Schicht 6 versehen.

Bei Aufbringen einer geeigneten dielektrischen Schicht auf die Innenfläche der metallischen Elektrode 1 kann man auch mit Dielektrika hoher Dielektrizitätskonstante eine Ozonausbeute erhalten, die den mit Glasdielektrika bestückten Ozonisatoren entspricht. Die Dicke der dielektrischen Beschichtung kann zwischen 10 $\mu$m und 1 mm betragen. Eine (materialabhängige) Mindestschichtstärke ist notwendig, um den gewünschten Effekt zu zeigen. Bei einer zu grossen Schichtstärke wird die Gesamtkapazität des Ozonisators (Serienschaltung der Kapazitäten) der Beschichtung der Metallelektrode 1 und des Dielektrikums 3, 4 so sehr verringert, dass man die Vorteile der hohen Dielektrikumskapazität wieder verliert. Ausserdem verschlechtert sich der Wärmeübergang zwischen dem Spalt und der (gekühlten) Metallelektrode 1. Da die angelegte elektrische Spannung vom Dielektrikum (3,4) selbst gehalten werden muss, wird an die Spannungsfestigkeit der Beschichtung (6) keine besondere Anforderung gestellt.

Die Schicht 6 kann bei äusseren Elektroden 1 aus Aluminium eine Eloxalschicht sein. Stahlelektroden können durch vorgängiges Beschichten mit Aluminium gleichfalls innen eloxiert werden. Daneben kommt aber auch das Beschichten mit Email, Spritzschichten oder Beschichten mit keramischen Klebern oder Vergussmassen in Frage.

Die vorstehend beschriebenen Massnahmen zur Erhöhung der Ozonausbeute wurden anhand eines Röhrenozonisators beschrieben. Selbstverständlich lassen sie sich auf bei Ozonistoren mit anderer Geometrie, insbesondere Plattenozonisatoren anwenden, ohne den Rahmen der Erfindung zu verlassen.

## Patentansprüche

1. Ozonerzeuger mit einer ersten (1) und einer zweiten metallischen Elektrode (2), mit einer Schicht aus Dielektrikum auf der der ersten Elektrode (1) zugewandten Oberfläche der zweiten Elektrode (2) und einem dazwischenliegenden Entladungsspalt (5), wobei das Dielektrikum aus mindestens einer ersten und einer zweiten Schicht besteht, von denen die an den Entladungsspalt (5) angrenzende erste Schicht (4) eine kleinere Dielektrizitätskonstante aufweist als die darunterliegende(n) zweite(n) Schicht(en) (3), dadurch gekennzeichnet, dass die zweite Schicht (3) aus Email mit einer hohen Dielektrizitätskonstante besteht, und dass die erste Schicht (4) ebenfalls aus Email besteht, mit einer Dielektrizitätskonstante, die niedriger ist als diejenige der zweiten Schicht (3).

2. Ozonerzeuger nach Anspruch 1, dadurch gekennzeichnet, dass das Email der ersten Schicht (4) insbesondere ein eisen- oder kobalthaltiges Email mit einer Dielektrizitätskonstante $\leq 6$ ist, während das Email der unteren Schicht(en) (3) ein Email auf Titan-Basis oder zumindest $TiO_2$ enthält mit einer Dielektrizitätskonstanten $\geq 10$.

3. Ozonerzeuger nach Anspruch 1 oder 2, dadurch gekennzeichnet, dass die Dicke der zweiten Schicht (3) zwischen 200 $\mu$m und 1 mm, diejenige der ersten Schicht (4) zwischen 50 und 150 $\mu$m beträgt.

4. Ozonerzeuger nach einem der Ansprüche 1 bis 3, dadurch gekennzeichnet, dass die zweite(n) Schicht(en) (3) unmittelbar auf die zweite Elektrode (2) aufgebracht sind, welche Elektrode vorzugsweise aus Edelstahl besteht.

5. Ozonerzeuger nach einem der Ansprüche 1 bis 4, dadurch gekennzeichnet, dass die Innenfläche der ersten Elektrode (1) mit einer maximal 1 mm dicken dielektrischen Schicht (6) versehen ist.

6. Ozonerzeuger nach Anspruch 5, dadurch gekennzeichnet, dass die dielektrische Schicht (6) eine Eloxal- oder Emailschicht ist.

7. Ozonerzeuger nach Anspruch 6, dadurch gekennzeichnet, dass die erste Elektrode (1) aus Stahl besteht, deren dem Entladungsraum (5) zugewandte Oberfläche vor dem Aufbringen der Eloxalschicht vorgängig mit Aluminium beschichtet wurde.

8. Ozonerzeuger nach Anspruch 5, dadurch gekennzeichnet, dass die dielektrische Schicht (6) ein keramischer Kleber oder eine keramische Vergussmasse ist.

## Claims

1. Ozone generator with a first (1) and a second metallic electrode (2), with a layer of dielectric on the surface of the second electrode (2) facing the first electrode (1) and a discharge gap (5) lying therebetween, the dielectric comprising at least a first and a second layer, of which the first layer (4), adjacent to the discharge gap (5), has a lower dielectric constant than the second layer(s) (3) lying thereunder, characterized in that the second layer (3) consists of enamel having a high dielectric constant, and in that the first layer (4) likewise consists of enamel, having a dielectric constant which is lower than that of the second layer (3).

2. Ozone generator according to Claim 1, characterized in that the enamel of the first layer (4) is in particular an enamel containing iron or cobalt with a dielectric constant $\leq 6$, while the enamel of the lower layer(s) (3) [lacuna] an enamel based on titanium, or at least contains $TiO_2$, with a dielectric constant $\geq 10$.

3. Ozone generator according to Claim 1 or 2, characterized in that the thickness of the second layer (3) is between 200 $\mu$m and 1 mm, that of the first layer (4) is between 50 and 150 $\mu$m.

4. Ozone generator according to one of Claims 1 to 3, characterized in that the second layer(s) (3) are applied directly to the second electrode (2), which electrode preferably consists of high-grade steel.

5. Ozone generator according to one of Claims 1 to 4, characterized in that the inside surface of the first electrode (1) is provided with an at most 1 mm thick dielectric layer (6).

6. Ozone generator according to Claim 5, characterized in that the dielectric layer (6) is an anodized oxide or enamel layer.

7. Ozone generator according to Claim 6, characterized in that the first electrode (1) consists of steel, the surface of which facing the discharge space (5) has been previously coated with aluminium before applying the anodized oxide layer.

8. Ozone generator according to Claim 5, characterized in that the dielectric layer (6) is a ceramic adhesive or a ceramic casting compound.

**Revendications**

1. Ozoniseur ayant une première électrode métallique (1) et une deuxième électrode métallique (2), une couche en diélectrique sur la surface, tournée vers la première électrode (1), de la deuxième électrode (2), et un entrefer de décharge (5) qui se trouve entre ces derniers, le diélectrique se composant au moins d'une première couche et d'une deuxième couche, dont la première couche (4) adjacente à l'entrefer de décharge (5) présente une constante diélectrique plus petite que la ou les deuxième(s) couche(s) (3) située(s) en dessous, caractérisé en ce que la deuxième couche (3) se compose d'un émail ayant une constante diélectrique élevée, et en ce que la première couche (4) se compose également d'émail ayant une constante diélectrique qui est inférieure à celle de la deuxième couche (3).

2. Ozoniseur selon la revendication 1, caractérisé en ce que l'émail de la première couche (4) est en particulier un émail contenant du fer ou du cobalt, ayant une constante diélectrique $\leq$ 6, alors que l'émail de la ou des couche(s) inférieure(s) (3) est un émail à base de titane ou contient au moins $TiO_2$, avec une constante diélectrique $\geq$ 10.

3. Ozoniseur selon la revendication 1 ou 2, caractérisé en ce que l'épaisseur de la deuxième couche (3) est comprise entre 200 microns et 1 mm, celle de la première couche (4) est comprise entre 50 et 150 microns.

4. Ozoniseur selon l'une quelconque des revendications 1 à 3, caractérisé en ce que la ou les deuxième(s) couche(s) (3) sont appliquées directement sur la deuxième électrode (2), laquelle électrode se compose de préférence d'acier allié.

5. Ozoniseur selon l'une quelconque des revendications 1 à 4, caractérisé en ce que la surface interne de la première électrode (1) est pourvue d'une couche diélectrique (6) épaisse de 1 mm au maximum.

6. Ozoniseur selon la revendication 5, caractérisé en ce que la couche diélectrique (6) est une couche en éloxal ou en émail.

7. Ozoniseur selon la revendication 6, caractérisé en ce que la première électrode (1) se compose d'acier, dont la face faisant face à l'espace de décharge (5) a été revêtue d'aluminium, préalablement à l'application de la couche d'éloxal.

8. Ozoniseur selon la revendication 5, caractérisé en ce que la couche diélectrique (6) est un adhésif céramique ou une masse de remplissage céramique.